# EUROPEAN PATENT APPLICATION

(11) **EP 4 759 165 A1**
(43) Date of publication of application: **17.06.2026**
(21) Application number: 24852291.4
(22) Date of filing: 06.08.2024
(51) Int. Cl.: A24F 40/53, H01M 10/42, H02J 7/00, A24F 40/90, A24F 40/42, A24F 40/46, A24F 40/57, G06F 16/38

(54) **AEROSOL GENERATING DEVICE AND METHOD FOR PERFORMING AUTHENTICATION OF DETACHABLE BATTERY IN AEROSOL GENERATING DEVICE**

(30) Priority: 09.08.2023 KR 20230104391; 07.11.2023 KR 20230153085
(71) Applicant: KT&G Corporation, Daedeok-gu Daejeon 34337 (KR)
(72) Inventor: JUNG, Jin Chul, Daejeon 34079 (KR); KIM, Jae Hyuk, Seoul 06352 (KR); PARK, Sang Cheol, Suwon-si, Gyeonggi-do 16469 (KR); SEO, Jang Won, Daejeon 34023 (KR); WOO, Young Min, Hwaseong-si, Gyeonggi-do 18391 (KR); LEE, Won Kyeong, Guri-si, Gyeonggi-do 11920 (KR); JANG, Chul Ho, Bucheon-si, Gyeonggi-do 14725 (KR); HAN, Dae Nam, Seoul 06331 (KR)
(74) Representative: Ter Meer Steinmeister & Partner
(86) International application number: PCT/KR2024/011609
(87) International publication number: WO 2025/033937

(57) **Abstract**

In an aerosol-generating device and a method of authenticating a removable battery in the aerosol-generating device, a protection circuit module is accessed by electrically coupling with the protection circuit module provided in the removable battery when a removable battery is newly mounted on the aerosol-generating device, authentication information of the removable battery is obtained from the protection circuit module by accessing the protection circuit module through the battery connection unit, whether the removable battery is an authenticated battery or unauthenticated battery for the aerosol-generating device is determined based on the obtained authentication information, and the aerosol-generating device is controlled to operate in an authenticated mode in which all functions of the aerosol-generating device are activated by power supply from the removable battery, when the removable battery is determined as being an authenticated battery, or in an unauthenticated mode in which at least some functions of the aerosol-generating device are deactivated by power supply from the removable battery, when the removable battery determined as being an unauthenticated battery.

## Description

### TECHNICAL FIELD

The present disclosure relates to an aerosol-generating device and a method of authenticating a removable battery in an aerosol-generating device.

### BACKGROUND ART

Recently, the demand for alternative methods for overcoming the shortcomings of general cigarettes has increased. For example, there is an increasing demand for a system for generating aerosols by heating a cigarette or an aerosol generating material by using an aerosol generating device, rather than by burning cigarettes. Accordingly, research on heating-type aerosol generating devices has been actively conducted.

As interest in environmental issues increases worldwide, there is a growing demand for proof of environmental friendliness and safety throughout the entire life cycle of batteries, from production to recycling. Accordingly, research on detachable batteries is being conducted in the electronic cigarette field while promoting the development of related technologies such as battery reuse and recycling.

### Disclosure of Invention

### TECHNICAL PROBLEM

If a battery in an aerosol-generating device is implemented to be easily removable by a user, use of an unauthenticated battery by mounting an unauthenticated battery may shorten the life or cause malfunction of the aerosol-generating device, and thus the safe use of the aerosol-generating device may not be guaranteed. Therefore, a method for determining whether the battery to be used in an aerosol-generating device is a battery certified by the manufacturer.

The technical problems of the disclosure are not limited to the aforementioned description, and other technical problems may be derived from the embodiments described hereinafter.

### SOLUTION TO PROBLEM

According to the present disclosure, to prevent safety degradation of the aerosol-generating device and device malfunction due to use of an unauthenticated battery, provided is an aerosol-generating device implementing a function that allows easy authentication of whether a removable battery to be used is a product authenticated by the manufacturer.

According to an aspect, a method of authenticating a removable battery in an aerosol-generating device includes, when a removable battery is newly mounted on the aerosol-generating device, accessing a protection circuit module by electrically coupling with the protection circuit module provided in the removable battery, obtaining authentication information of the removable battery from the accessed protection circuit module, based on the obtained authentication information, determining whether the removable battery is an authenticated battery or unauthenticated battery for the aerosol-generating device, and controlling the aerosol-generating device to, when determined as being the authenticated battery, operate in an authenticated mode in which all functions of the aerosol-generating device are activated by power supply from the removable battery or, when determined as being the unauthenticated battery, in an unauthenticated mode in which at least some functions of the aerosol-generating device are deactivated by power supply from the removable battery.

According to another aspect, an aerosol-generating device includes, a battery connection unit configured to, when a removable battery newly is mounted on the aerosol-generating device, access a protection circuit module by electrically coupling with the protection circuit module provided in the removable battery, a processor configured to obtain authentication information of the removable battery from the protection circuit module by accessing the protection circuit module through the battery connection unit, determine whether the removable battery is an authenticated battery or unauthenticated battery for the aerosol-generating device, based on the obtained authentication information, and control the aerosol-generating device to operate in an authenticated mode in which all functions of the aerosol-generating device are activated by power supply from the removable battery, when the removable battery is determined as an authenticated battery, or in an unauthenticated mode in which at least some functions of the aerosol-generating device are deactivated by power supply from the removable battery, when the removable battery is determined as an unauthenticated battery.

According to another aspect, a non-transitory computer-readable recording medium may include a recording medium recording at least one program including instructions to perform the above method.

### Advantageous Effects of Invention

According to the above, using an unauthenticated battery may be prevented by inducing use of an authenticated battery by performing authentication of a removable battery when the removable battery is mounted, and using a safe device may be guaranteed by preventing malfunction of the aerosol-generating device due to use of an unauthenticated battery.

### BRIEF DESCRIPTION OF DRAWINGS

FIG. 1 is a block diagram showing hardware components of an aerosol-generating device according to an embodiment.
FIGS. 2A to 2E are diagrams illustrating embodiments of the aerosol-generating device of FIG. 1 implemented in various types.
FIG. 3 is a diagram for explaining a removable battery used in an aerosol-generating device according to an embodiment.
FIG. 4 is a diagram for explaining mounting a new removable battery on an aerosol-generating device according to an embodiment.
FIG. 5 is a diagram for explaining a transmission path of authentication information for performing authentication of a removable battery according to an embodiment.
FIG. 6 is a diagram for explaining, in detail, authentication information stored in a protection circuit module, according to an embodiment.
FIG. 7 is a detailed flowchart of a method of authenticating a removable battery in an aerosol-generating device according to an embodiment.
FIG. 8 is a diagram for explaining operation of an aerosol-generating device in an unauthenticated mode, according to an embodiment.
FIG. 9 is a diagram for explaining operation of an aerosol-generating device in an authenticated mode, according to an embodiment.
FIG. 10 is a flowchart of a method of authenticating a removable battery in an aerosol-generating device according to an embodiment.

### Best Mode for Carrying out the Invention

According to an aspect, a method of authenticating a removable battery in an aerosol-generating device includes, when a removable battery is newly mounted on the aerosol-generating device, accessing a protection circuit module by being electrically coupled with the protection circuit module provided in the removable battery, obtaining authentication information of the removable battery from the accessed protection circuit module, based on the obtained authentication information, determining whether the removable battery is an authenticated battery or an unauthenticated battery for the aerosol-generating device, and, when determined as the authenticated battery, controlling the aerosol-generating device to operate in an authenticated mode in which all functions of the aerosol-generating device are activated by power supply from the removable battery when the removable battery is determined as an authenticated battery or in an unauthenticated mode in which at least some functions of the aerosol-generating device are deactivated by power supply from the removable battery when the removable battery determined as an unauthenticated battery.

### Mode for the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, when an expression such as "at least any one" precedes arranged elements, it modifies all elements rather than each arranged element. For example, the expression "at least any one of a, b, and c" should be construed to include a, b, c, or a and b, a and c, b and c, or a, b, and c.

Hereinafter, the embodiments will now be described more fully with reference to the accompanying drawings, in which exemplary embodiments are shown such that one of ordinary skill in the art may easily work the embodiments. The embodiments can, however, be embodied in many different forms and should not be construed as being limited to the embodiments set forth herein.

Hereinafter, embodiments will be described in detail with reference to the drawings.

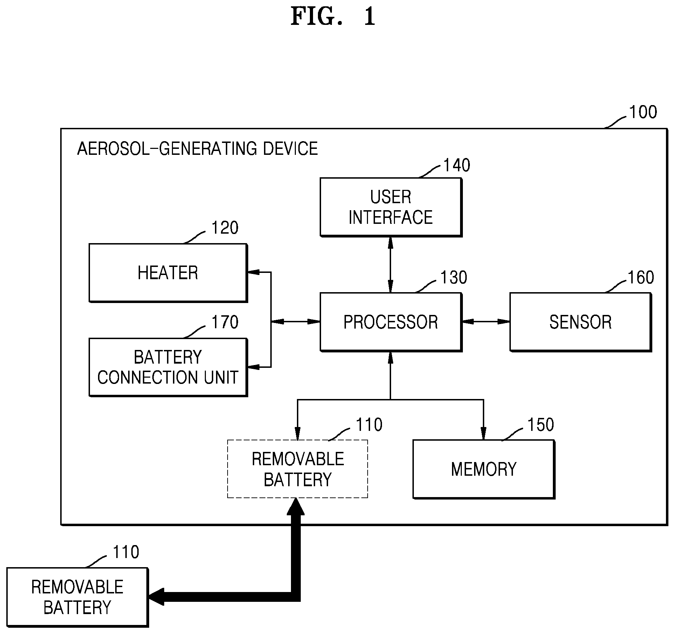

FIG. 1 is a block diagram showing hardware components of an aerosol-generating device, according to an embodiment.

Referring to FIG. 1, the aerosol-generating device 100 may include a removable battery 110, a heater 120, a processor 130, a user interface 140, a memory 150, a sensor 160, and a battery connection unit 170. However, the hardware components inside the aerosol-generating device 100 are not limited to those shown in FIG. 1. Those skilled in the art relating to the present embodiment may understand that some of the hardware components shown in FIG. 1 may be omitted or a new component (e.g., a communication module, etc.) may be added to FIG. 1 according to the design of the aerosol-generating device 100.

Hereinafter, operation of each of the components will be described without being limited to a space in which each of the components in the aerosol generating device 100 is located.

The removable battery 110 may supply power to be used for operating the aerosol-generating device 100. For example, the removable battery 110 may supply power to the heater 120 for heating the heater. In addition, the removable battery 110 may supply power required for the operation of other hardware components provided in the aerosol-generating device 100, such as the heater 120, the processor 130, the user interface 140, the memory 150, the sensor 160, or the battery connection unit 170. The removable battery 110 may be, for example, a lithium polymer (LiPoly) battery or a lithium ion battery, but is not limited thereto.

The removable battery 110 is a replaceable type (separate) power source and may be mounted in a battery accommodation unit provided in the aerosol-generating device 100 or removed from the battery accommodation unit. The removable battery 110 is provided with an electric contact, and when the removable battery 110 is mounted on the aerosol-generating device 100, the electric contact of the removable battery 110 may be electrically connected to the electric contact of a battery connection unit 170 provided in the aerosol-generating device 100 to provide battery-related data or supply power to the aerosol-generating device 100. In another example, the removable battery 110 may be provided with a charging coil (transmission/reception coil), instead of a separate electric contact, for supplying power to the aerosol-generating device 100 through a wireless charging method and in this case, the battery connection unit may be implemented as a transmission/reception coil. That is, power supply methods of the removable battery 110 may vary, and electrical connection methods between the removable battery 110 and the battery connection unit 170 of the aerosol-generating device 100 may vary according to the power supply method supported by the removable battery 110.

The removable battery 110 may be provided with a charger interface (not shown) that may be connected to an external charger. Power for charging the removable battery 110 may be supplied to the removable battery 110 via the charger interface. The removable battery 110 may be charged by an external charger while being attached to the aerosol-generating device 100 or uninstalled from the aerosol-generating device 100.

The removable battery 110 may be optionally provided with a wireless tag such as a radio frequency identification (RFID) tag, a near field communication (NFC) tag, etc. The wireless tag provided in the removable battery 110 may be read through a protocol for short-range communication with a wireless module such as an RFID module or an NFC module. When a wireless tag is provided in the removable battery 110, identification information related to the removable battery 110, battery capacity information, etc. may be recorded in the wireless tag. In this case, the aerosol-generating device 100 may obtain various information of the removable battery 110 by tagging the wireless tag of the removable battery 110.

The heater 120 may receive power from the removable battery 110 under the control of the processor 130. The heater 120 may perform a heating function of heating a cigarette inserted into the aerosol-generating device 100 or heating a cartridge mounted on the aerosol-generating device 100 by using power supplied from the removable battery 110. That is, the heater 120 may generate an aerosol by heating an aerosol-generating material provided in a cigarette or cartridge.

The heater 120 may be provided in a body of the aerosol-generating device 100. Alternatively, when the aerosol-generating device 100 consists of the body and the cartridge, the heater 120 may be provided in the cartridge. When the heater 120 is provided in the cartridge, the heater 120 may receive power from the removable battery 110 included in the body.

The heater 120 may be implemented as an electric resistance heating type heater formed of an electric resistance material. For example, the electric resistance material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome, but is not limited thereto. The heater 120 may be implemented as a metal heating wire, a metal heating plate on which an electrically conductive track is arranged, or a ceramic heating element, but is not limited thereto.

The heater 120 may be implemented as an induction heating heater. The heater 120 may correspond to a heater assembly implemented as a set of electrically conductive coils and susceptors for heating a cigarette or cartridge by induction heating.

The heater 120 may heat a cigarette inserted into an accommodation space provided in the aerosol-generating device 100. As the cigarette is accommodated in the accommodation space of the aerosol-generating device 100, the heater 120 may be positioned inside and/or outside the cigarette. Accordingly, the heater 120 may generate aerosol by heating the aerosol-generating material in the cigarette.

The heater 120 may be implemented as a coil heater provided only in the cartridge. The cartridge may include a coil heater, a liquid delivery means, and a liquid storage, an aerosol-generating material accommodated in the liquid storage may be delivered through a liquid delivery element, and an aerosol may be generated by the coil heater by heating the aerosol-generating material absorbed in the liquid delivery element. For example, if the heater 120 is a coil heater, the heater 120 may be formed with a material such as nickel chromium and may be wound around or arranged adjacent to the liquid delivery element.

The processor 130 may control general operations of the aerosol-generating device 100. The processor 130 may include at least one processing unit, such as a micro controller unit (MCU). The processor 130 may be implemented as an array of a plurality of logic gates or may be implemented as a combination of a general-purpose microprocessor and a memory in which a program executable in the microprocessor is stored. In addition, those skilled in the art related to the present embodiment may understand that the processor may consist of another type of hardware.

The processor 130 may analyze results sensed by the sensor 160 and control subsequent processing to be performed based on the sensing results. For example, the processor 130 may control power supplied to the heater 120 to start or end an operation of the heater 120 based on a result of sensing by the sensor 160. In addition, based on the result of sensing by the sensor 160, the processor 130 may control the amount of power supplied to the heater 120 and the time when the power is supplied such that the heater 420 is heated to a predetermined temperature or maintained at an appropriate temperature.

The processor 130 may control the operation of the heater 120 based on a pre-stored temperature profile. Additionally, the processor 130 may sense a user's puff by using a puff sensor in the sensor 160 to control the temperature of the heater 120. In addition, the processor 130 may count the number of puffs with the puff sensor and stop supplying power to the heater 120 when the number of puffs reaches a preset number.

The processor 130 may also control the user interface 140 based on the sensing result. For example, when the number of puffs reaches a preset number after counting the number of puffs with the puff sensor, the processor 130 may notify the user that the aerosol-generating device 100 will end soon with a lamp, a motor, or a speaker.

The processor 130 may recognize or detect that the removable battery 110 has been detached or mounted through the battery connection unit 170. When the removable battery 110 is newly mounted, the processor 130 may determine whether the removable battery 110 corresponds to an authenticated product and determine whether to operate the aerosol-generating device 100 in either a battery authenticated mode or a battery unauthenticated mode. The authentication process of the removable battery 110 is described in more detail below with reference to other drawings.

The user interface 140 may provide the user with information about the state of the aerosol-generating device 100. The user interface 140 may include various interfacing elements, such as a display or lamp that outputs visual information (a user interface screen), a motor that outputs tactile information, a speaker that outputs sound information, input/output (I/O) interfacing elements (e.g., a button or a touch screen) that receive information input from the user or output information to a user, and terminals for receiving charging power.

When the removable battery 110 is newly mounted, the user interface 140 may provide a notification indicating that the aerosol-generating device 100 is currently operating in an authenticated mode or an unauthenticated mode, according to whether the removable battery 110 is authenticated.

The memory 150 may be a hardware component configured to store various pieces of data processed in the aerosol-generating device 100, and the memory 150 may store data processed or to be processed by the processor 130. The memory 150 includes various memory devices, for example, random access memory (RAM) such as dynamic random access memory (DRAM) or static random access memory (SRAM), read-only memory (ROM), electrically erasable programmable read-only memory (EEPROM), and so on.

The memory 150 may store various types of information, such as an operating time of the aerosol-generating device 100, the maximum number of puffs, the temperature profile, the user's smoking information, and information for battery authentication. The memory 150 may also store backup and restore data for performing backup process and restoring process to maintain various pieces of data in the aerosol-generating device 100 before and after battery replacement in the replacement process of the removable battery 110.

The battery connection unit 170 is a connector in which an electrical connection with the removable battery 110 is formed when the removable battery 110 is newly mounted in the aerosol-generating device 100. Particularly, the battery connection unit 170 may be electrically connected to a protection circuit module (PCM) provided in the removable battery 110.

The aerosol-generating device 100 may receive power from the removable battery 110 through the battery connection unit 170 and may also transmit and receive data by accessing a protection circuit module of the removable battery 110 through the battery connection unit 170.

The removable battery 110 may be coupled to the aerosol-generating device 100, for example, by being fixed to a battery accommodation unit (not shown) having a hook structure. In another example, the removable battery 110 may be implemented by a method in which a magnetic body in a portion of the removable battery 110 is magnetically coupled to a magnetic body area or an electromagnet area provided in a portion of the battery accommodation unit. That is, the method in which the removable battery 110 according to the present embodiment is mounted on the aerosol-generating device 100 is not limited to one, and may be implemented in various ways.

Although not shown in FIG. 1, the aerosol-generating device 100 may constitute an aerosol generating system together with a separate cradle. For example, the cradle may be used to store the aerosol-generating device 100 while charging the removable battery 110 of the aerosol-generating device 100. That is, the cradle may be a dedicated device for the aerosol-generating device 100 that receives power from the battery of the cradle and charges the removable battery 110 of the aerosol-generating device 100 while the aerosol-generating device 100 is accommodated in the accommodation space in the cradle.

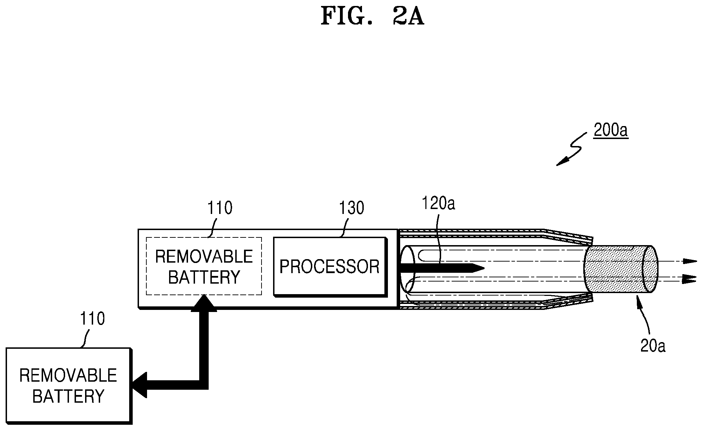

FIGS. 2A to 2E are diagrams illustrating embodiments of the aerosol-generating device of FIG. 1 implemented in various types. Referring to FIGS. 2A to 2E, the aerosol-generating device 100 may be implemented as various types of aerosol-generating devices 200a to 200e, such as those using an electric resistance heating method or an induction heating method, those additionally provided with a vaporizer, and those using a cartridge method. Only some elements for explaining the types of aerosol-generating devices 200a to 200e are illustrated in FIGS. 2A to 2E, and other general elements may be further included in the aerosol-generating devices 200a to 200e in addition to the elements illustrated in FIGS. 2A to 2E.

In FIGS. 2A to 2E, the removable battery 110, heaters 120a to 120e, and the processor 130 are components corresponding to the removable battery 110, the heater 120, and processor 130 of FIG. 1, respectively, and may perform the functions of the removable battery 110, the heater 120, and the processor 130 described above in FIG. 1.

FIG. 2A is a diagram for explaining an aerosol-generating device 200a using electric resistance according to an example embodiment. The aerosol-generating device 200a may be a type of the aerosol-generating device 100.

Referring to FIG. 2A, the aerosol-generating device 200a may include the removable battery 110, the heater 120a, and the processor 130.

A cigarette 20a may be inserted into an accommodation space of the aerosol-generating device 200a. When the cigarette 20a is inserted into the aerosol-generating device 200a, the aerosol-generating device 200a may generate an aerosol from the cigarette 20a by heating the cigarette 20a by using the heater 120a. The generated aerosol passes through the cigarette 20a and is delivered to the user, so the user may smoke the cigarette 20a.

The heater 120a may be heated by the power supplied from the removable battery 110. The heater 130 may be an electric resistance heater. For example, the heater 120a may include an electrically conductive track, and the heater 120a may be heated when currents flow through the electrically conductive track.

The electrically conductive track of the heater 120a may be made of an electric resistance material and a heating temperature of the heater 120a may be determined according to power consumption of resistance, and a resistance value of the electrically conductive track may be set based on the power consumption of resistance of the electrically conductive track. The resistance value of the electrically conductive track may be variously set according to a component material, length, width, thickness, pattern, or the like of the electrical resistive material.

The electrically conductive track may have an internal resistance level that increases as the temperature increases according to a resistance temperature coefficient characteristic. For example, in a predetermined temperature range, the temperature of the electrically conductive track and the magnitude of resistance may be proportional. Using the above principle, the heater 120a made of an electrically conductive track may heat the cigarette 20a by electric resistance.

The electrically conductive track may be made of tungsten, gold, platinum, silver copper, nickel palladium, or a combination thereof. In addition, the electrically conductive track may be doped with a suitable dopant and may include an alloy.

The heater 120a may be manufactured in various shapes, such as a tube shape, a plate shape, a needle shape, or a rod shape. In addition, a plurality of heaters 120a may be arranged. The heater 120a may be inserted into the cigarette 20a and used in an internal heating method to heat the inside of the cigarette 20a.

The removable battery 110 may be separated from or mounted on the aerosol-generating device 200a, and when the removable battery 110 is mounted on the aerosol-generating device 200a, power may be supplied from the removable battery 110 to the heater 120a for the heating operation of the heater 120a, thereby controlling the temperature of the electrically conductive track.

The processor 130 may control the heating operation of the heater 120a by controlling the power supplied to the heater 120a. For example, the processor 130 may control the temperature at which the cigarette 20a is heated by the heater 120a according to the temperature profile.

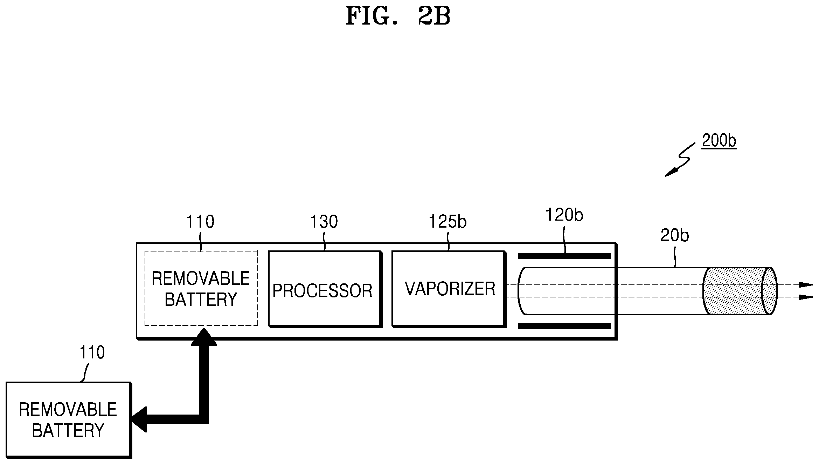

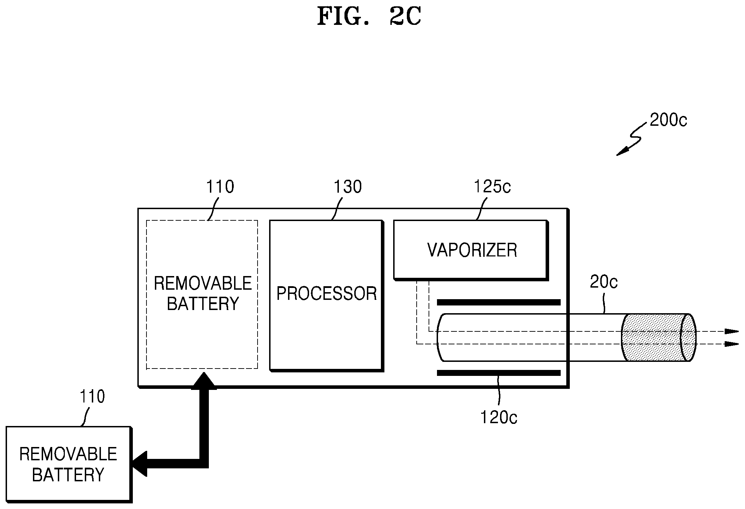

FIGS. 2B and 2C are diagrams for explaining aerosol-generating devices 200b and 200c additionally provided with vaporizers 125b and 125c according to example embodiments. Each of the aerosol-generating devices 200b and 200c may be a type of the aerosol-generating device 100.

Referring to FIGS. 2B and 2C, the aerosol-generating devices 200b and 200c may further include the vaporizers 125b and 125c. Cigarettes 20b and 20c may be inserted into the aerosol-generating devices 200b and 200c.

FIG. 2B shows that the vaporizer 125b and the heater 120b are arranged in a row. However, FIG. 2C illustrates that the vaporizer 125c and the heater 120c are arranged in parallel. That is, the aerosol-generating devices 200b and 200c may be distinguished according to the arrangement of the vaporizer 125b.

The heaters 120b and 120c may be heated by power supplied from the removable battery 110. The heaters 120b and 120c are electric resistance heaters and may include, for example, electrically conductive tracks.

Unlike the heater 120a described in FIG. 2A, the heaters 120b and 120c of FIGS. 2B and 2C may be implemented as an external heating type by being arranged around the outer circumference of the cigarettes 20b and 20c to heat the outer surface of the cigarettes 20b and 20c.

The vaporizers 125b and 125c may include a liquid storage, a liquid delivery element, and a heating element (or vaporizing element). In other words, the aerosol generated by the vaporizers 125b and 125c may be delivered along an airflow passage of the aerosol-generating devices 200b and 200c and the airflow passage may be configured such that the aerosol generated by the vaporizers 125b and 125c passes through the cigarettes 20b and 29c to be delivered to the user.

The vaporizers 125b and 125c may include a liquid storage, a liquid delivery element, and a heating element (or a vaporizing element). However, the liquid storage, the liquid delivery element, and the heating element may each be an independent module arranged in other locations within the aerosol-generating device 100 rather than within the vaporizers 125b and 125c.

The liquid storage may store a liquid composition. For example, the liquid composition may be a liquid including a tobacco-containing material including a volatile tobacco flavor component or may be a liquid including a non-tobacco material. The liquid storage may be detachable from the vaporizers 125b and 125c or integrally formed with the vaporizers 125b and 125c. For example, the liquid composition may include water, a solvent, ethanol, plant extract, spices, flavorings, or a vitamin mixture. Also, the liquid composition may include an aerosol forming substance, such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element provided in the vaporizers 125b and 125c is an element for heating (vaporizing) a liquid composition delivered by a liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosol may be generated. Accordingly, the vaporizers 125b and 125c may also be referred to by other terms such as cartomizer or atomizer.

The removable battery 110 may be separated from or mounted on the aerosol-generating devices 200b and 200c, and when the removable battery 110 is mounted on the aerosol-generating devices 200b and 200c, power may be supplied from the removable battery 110 to the heaters 120b and 120c and the vaporizers 125b and 125c for the heating operation of the heaters 120b and 120c and the vaporizers 125b and 125c.

The processor 130 may control the heating operation of the heaters 120b and 120c and the vaporizers 125b and 125c by controlling the power supplied to the heaters 120b and 120c and the vaporizers 125b and 125c. For example, the processor 130 may control the temperature at which the cigarettes 20b and 20c are heated by the heaters 120b and 120c and the vaporizers 125b and 125c according to the temperature profile.

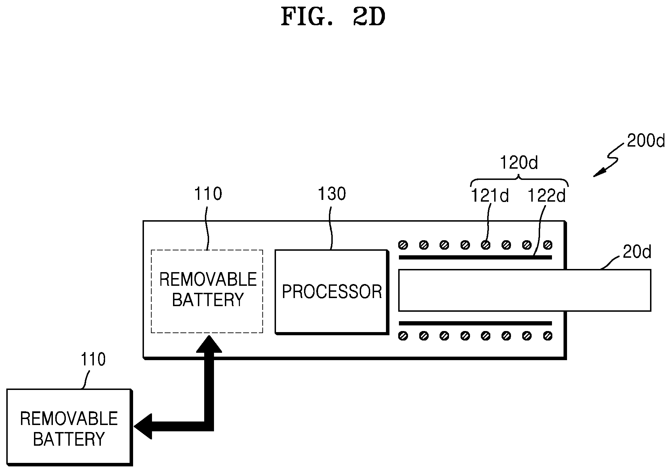

FIG. 2D is a diagram for explaining an aerosol-generating device 200d using an induction heating method according to an example embodiment. The aerosol-generating device 200d may be a type of the aerosol-generating device 100.

Referring to FIG. 2D, the aerosol-generating device 200d may include a heater 120d including a coil 121d and a susceptor 122d, the removable battery 110, and the processor 130.

The aerosol-generating device 200d may generate an aerosol by heating a cigarette 20d accommodated in the aerosol-generating device 200d by induction heating. The induction heating method may refer to a method of letting a magnetic substance emit heat by applying, to the magnetic substance, which emits heat by using an external magnetic field, an alternating magnetic field, a direction of which is periodically changed. Thus, the aerosol-generating device 200d may emit heat energy from a magnetic body by applying an alternating magnetic field to the magnetic material and may heat the cigarette 20d by transmitting the thermal energy emitted from the magnetic body to the cigarette 20d. Here, the magnetic body that emits heat by an external magnetic field may be the susceptor 122d. The susceptor 122d may be provided in the aerosol-generating device 200d. Alternatively, the susceptor 122d may be provided inside the cigarette 20d in a shape of a piece, a thin piece, a strip, etc. instead of being provided in the aerosol-generating device 200d.

The susceptor 122d may be formed of a ferromagnetic substance. For example, the susceptor 122 may include metal or carbon. The susceptor 122d may include at least one of ferrite, a ferromagnetic alloy, stainless steel, and aluminum (Al). In addition, the material of the susceptor 122d may include at least one of a ceramic such as graphite or zirconia, a transition metal such as nickel (Ni) or cobalt (Co), or a metalloid such as boron (B) or phosphorus (P).

The aerosol-generating device 200d may accommodate a cigarette 20d. A space for accommodating the cigarette 20d may be formed in the aerosol-generating device 200d. A susceptor 122d may be arranged around a circumference of the space accommodating the cigarette 20d. For example, the susceptor 122d may have a cylindrical shape surrounding the outside of the cigarette 20d. Accordingly, when the cigarette 20d is accommodated in the aerosol- generating device 200d, the cigarette 20d may be accommodated in the accommodation space of the susceptor 122d, and the susceptor 122d may be arranged at a position surrounding at least a portion of the outer surface of the cigarette 20d. However, the shape of the susceptor 122d is not limited thereto and may vary.

The heater 120d using an induction heating method may heat the cigarette 20d accommodated in the aerosol-generating device 200d by using the susceptor 122d that emits heat by an external magnetic field generated by the coil 121d.

The coil 121d may be wound along the outer surface of the susceptor 122d, such that an alternating magnetic field is applied to the susceptor 122d. When power is supplied to the coil 121d from the aerosol-generating device 200d, a magnetic field may be formed inside the coil 121d. When an alternating current is applied to the coil 121d, a direction of the magnetic field formed inside the coil 121d may be continuously changed. When the susceptor 122d is positioned inside the coil 121d to be exposed to an alternating magnetic field having a periodically changing direction, the susceptor 122d may emit heat, and the cigarette 20d accommodated in the susceptor 122d may be heated. The coil 121d may have a cylindrical shape wound along the length direction of the cigarette 20d, but is not limited thereto and the coil 121d may be implemented in various types such as a flat coil.

The removable battery 110 may be separated from or mounted on the aerosol-generating device 200d, and when the removable battery 110 is mounted on the aerosol-generating device 220d, power may be supplied to the coil 121d for the heating operation of the heater 120d, for example.

The processor 130 may control the heating operation of the heater 120d by controlling the power supplied to the coil 121d. For example, the processor 130 may control the temperature at which the cigarette 20d is heated by inductive heating of the susceptor 122d by adjusting the strength of the magnetic field induced by the coil 121d according to the temperature profile.

In FIG. 2D, it is assumed that the heater 120d is implemented using an induction heating method using the coil 121d and the susceptor 122d, but as another embodiment, the heater 120d may be implemented as an electric resistance heater (e.g., a cylindrical film heater) as described in FIGS. 2B and 2C to heat the outside of the cigarette 20d. That is, if the heater 120d is manufactured as an electric resistance heater, the aerosol-generating device 200d of FIG. 2D may also be implemented to generate an aerosol from the cigarette 20d using only an electric resistance heater (the heater 120d) without the vaporizers 125b and 125c of FIGS. 2B and 2C.

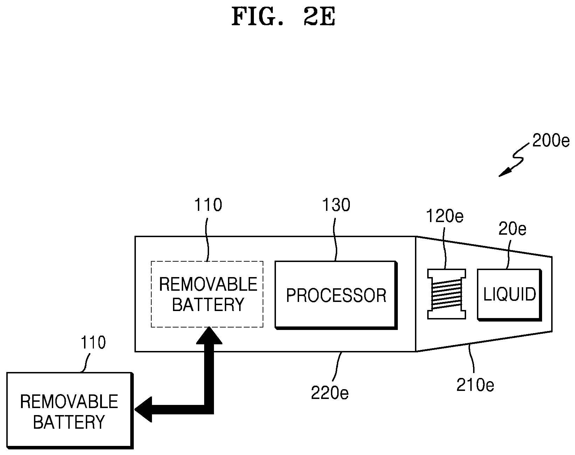

FIG. 2E is a diagram for explaining an aerosol-generating device 200e having a replaceable cartridge 210e including an aerosol-generating material 20e according to an example embodiment.

Referring to FIG. 2E, the aerosol-generating device 200e includes a cartridge 210e including the aerosol-generating material 20e and a main body 220e that supports the cartridge 210e. The aerosol-generating device 200e may correspond to a type of the aerosol-generating device 100 of FIG. 1. In this case, the hardware components included in the aerosol-generating device 100 of FIG. 1 may be divided to be positioned in the main body 220e and the cartridge 210e.

The cartridge 210e may be coupled to the main body 220e while accommodating an aerosol-generating material therein. The cartridge 210e may be mounted on the main body 210 by inserting a portion of the cartridge 210e into a receptacle of the main body 210.

The cartridge 210e may contain an aerosol-generating material 20e of a liquid composition, but is not limited thereto and may also contain an aerosol-generating material 20e in any one of a solid state, a gaseous state, and a gel state. For example, the liquid composition may be a liquid including a tobacco-containing material including a volatile tobacco flavor component or may be a liquid including a non-tobacco material.

The heater 120e provided in the cartridge 210e performs a heating operation by an electric signal or wireless signal transmitted from the main body 220e. Accordingly, an aerosol may be generated by vaporizing the aerosol-generating material 20e inside the cartridge 210e due to heating by the heater 120e.

The heater 120e may be implemented as a conductive filament made of a metal material such as copper, nickel, or tungsten, or a ceramic heating element, to heat an aerosol-generating material delivered to a liquid delivery element by generating heat through electric resistance, and may be wound around the liquid delivery element or placed adjacent to the liquid delivery element.

The removable battery 110 may be separated from or mounted on the aerosol-generating device 200e, and when the removable battery 110 is mounted on the aerosol-generating device 200e, power may be supplied to the heater 120e from the removable battery 110 for the heating operation of the heater 120e.

The processor 130 may control the heating operation of the heater 120e by controlling the power supplied to the heater 120e. For example, the processor 130 may control the temperature at which the aerosol-generating material 20e is heated by the heater 120e according to the temperature profile.

Although not illustrated in FIGS. 2A to 2E, the aerosol-generating devices 200a to 200e and an additional cradle may form a system. For example, the cradle may store the aerosol-generating devices 200a to 200e or charge the removable battery 110 of the aerosol-generating devices 200a to 200e.

According to various embodiments, the aerosol-generating device 100 of FIG. 1 may be implemented as at least one of the types of the aerosol-generating devices 200a to 200e of FIGS. 2A to 2E, but is not necessarily limited thereto and may be implemented as other types as well.

The aerosol-generating devices 200a to 200e of FIGS. 2A to 2E may commonly use the removable battery 110 as a power source. The removable battery 110 may be replaced by being mounted on or removed from the aerosol-generating devices 200a to 200e.

However, if the battery is easily removable/mountable by the user, the user may intentionally or unintentionally mount an unauthenticated battery in the aerosol-generating device. In such cases, the use of unauthenticated batteries may shorten the life or cause malfunction of the aerosol-generating device, thereby compromising the safety of the aerosol generating device. Therefore, a method of determining whether the battery to be used in the aerosol-generating device is manufactured or authenticated by the manufacturer. In the present embodiment, authentication of the removable battery may be performed through accessing a protection circuit module provided in the removable battery to identify whether the removable battery corresponds to an authenticated battery. Below, the process of performing authentication of the removable battery in the aerosol-generating device is described in more detail.

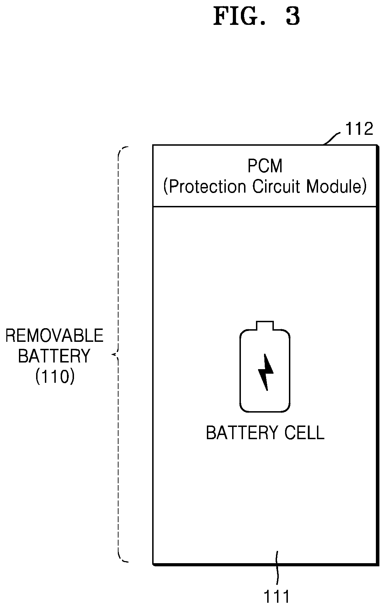

FIG. 3 is a diagram for explaining a removable battery used in an aerosol-generating device according to an embodiment.

Referring to FIG. 3, the removable battery 110 may include a battery cell 111 and a PCM 112.

The battery cell 111 corresponds to a power supply source storing electric energy to supply power to drive an electronic device such as the aerosol-generating device 100. The battery cell 111 may include a battery using a metal such as lithium (Li), cadmium (Cd), or nickel (Ni), and may correspond to, for example, a Li-Ion battery cell. That is, the battery cell 111 may be a secondary battery that may be repeatedly charged and discharged over a certain lifespan. However, the battery cell 111 is not limited thereto and may be implemented as other types of lithium polymer batteries.

The PCM 112 is an integrated circuit (IC) that may safely protect and manage a battery, and typically has an overcharge protection function, an overdischarge protection function, an overcurrent blocking function, and a short-circuit protection function. In addition, the PCM 112 may also have a cell balancing function.

That is, the PCM 112 may include circuit elements and a printed circuit board (PCB) on which the circuit elements are mounted so as to perform various electrical functions (e.g., a pre-blocking function) to prevent performance degradation or damage of the battery cell 111. The PCM 112 may also be implemented as part of a battery management system (BMS) that may perform various functions including measuring the capacity, the number of charge and discharge cycles, the temperature, or the voltage of the battery.

On the PCB of the PCM 112, a positive contact terminal that contacts a positive tab of the battery cell 111 and a negative contact terminal that contacts a negative tab of the battery cell 111 may be included. The PCM 112 may be electrically connected to the battery cell 111 through the positive contact terminal and the negative contact terminal.

When the removable battery 110 is mounted on the aerosol-generating device 100, the processor 130 of the aerosol-generating device 100 may control the charging and discharging of the battery cell 111 as the processor 130 communicates with the PCM 112 through the battery connection unit 170, may control the power supply from the battery cell 111, and may access data related to a battery stored in the PCM 112.

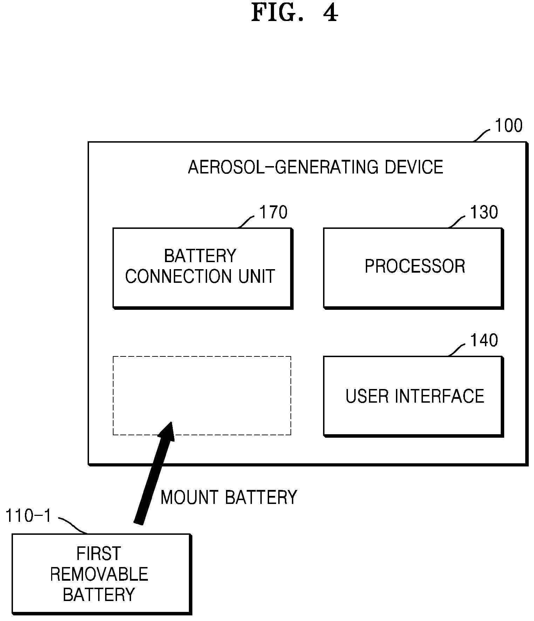

FIG. 4 is a diagram for explaining mounting a new removable battery on an aerosol-generating device according to an embodiment.

Referring to FIG. 4, a battery may not currently be mounted on the aerosol-generating device 100. In the above state, the battery may be removed from the aerosol-generating device 100 because the user wants to replace the battery with a new one, either because of expiration of battery life, because a battery with a different capacity is required by the user, or for other reasons. In this case, the user may wish to mount a first removable battery 110-1 as a new battery in the aerosol-generating device 100.

Here, when the first removable battery 110-1 is a defective/illegal product such as an unsupported battery or an unauthenticated battery, the aerosol-generating device 100 may unintentionally malfunction or the performance thereof may be deteriorated. Therefore, the aerosol-generating device 100 may restrict normal use of the battery when the battery is not authenticated. For example, even if the first removable battery 110-1, as an unauthenticated battery, is coupled to the aerosol-generating device 100, the aerosol-generating device 100 may restrict normal use of the aerosol-generating device 100 such that normal power supply from the first removable battery 110-1 is not performed or at least some functions are deactivated even if normal power supply is performed. However, when the authentication of the first removable battery 110-1, as an authenticated battery, is successful, the aerosol-generating device 100 controls the first removable battery 110-1 to be used normally.

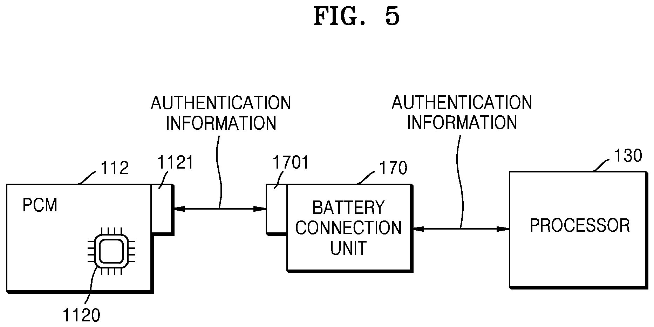

FIG. 5 is a diagram for explaining a transmission path of authentication information for performing authentication of a removable battery according to an embodiment.

Referring to FIG. 5, the aerosol-generating device 100 may access the PCM 112 by being electrically combined with the PCM 112 provided in the removable battery 110 when the removable battery 110 is newly mounted.

Particularly, a connector 1121 of the PCM 112 of the removable battery 110 may be coupled to a connector 1701 of the battery connection unit 170 such that the PCM 112 is electrically connected to the battery connection unit 170. Accordingly, the processor 130 may access the PCM 112 through the battery connection unit 170.

An IC 1120 in the PCM 112 stores authentication information for authenticating the removable battery 110. Since the PCM 112 is electrically connected to the battery connection unit 170, the processor 130 may obtain authentication information from the PCM 112 through the battery connection unit 170.

That is, the aerosol-generating device 100 according to the present embodiment may perform battery authentication by using the PCM 112 provided in the removable battery 110 to authenticate the removable battery 110.

Authentication information is unique information about the removable battery 110 and refers to battery identification information. That is, the authentication information corresponds to information that may be used to verify whether the battery product is managed by a manufacturer, a battery supplier, or other sales entities of the aerosol-generating device 100. The authentication information may include product serial number-type information, encrypted code-type information, or information implemented in other types. That is, the type of a battery identifier included in the authentication information is not limited to a single type, but may be information implemented in various types, as long as authentication of the uniqueness of the removable battery 110 may be performed.

The electrical connection between the PCM 112 and the battery connection unit 170 is a path that allows power supply from the battery cell 111 of the removable battery 110 to the hardware components in the aerosol generating device 100, as well as data access such as transmission of authentication information.

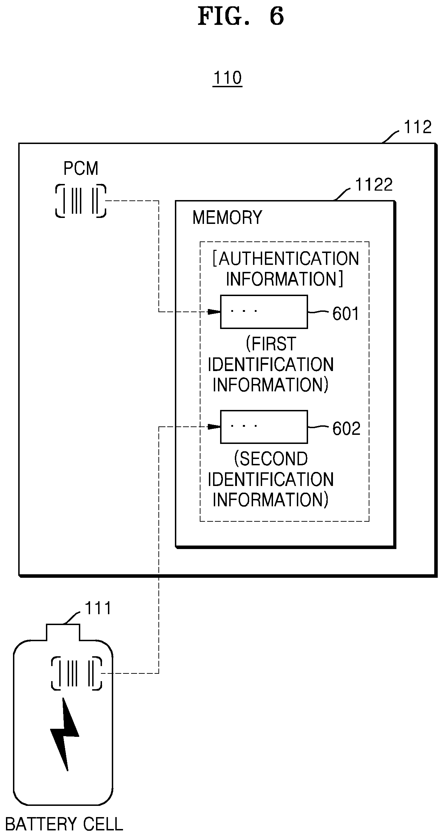

FIG. 6 is a diagram for explaining authentication information stored in a PCM according to an embodiment in detail.

Referring to FIG. 6, the IC 1120 of the PCM 112 is provided with a memory 1122.

The memory 1122 is a memory element integrated with a processing unit provided in the IC 1120, and stores battery-related data. The memory 1122 may be implemented as various types of RAM, ROM, EEPROM, etc., such as DRAM, SRAM, etc. The memory 1122 may store specification information of the removable battery 110, such as the capacity of the battery cell 111 provided in the removable battery 110, voltage/current related information, manufacturing date, etc.

The memory 1122 of the PCM 112 stores the authentication information described in FIG. 5.

The authentication information includes first identification information 601 indicating product-specific information about the PCM 112 and second identification information 602 indicating product-specific information about the battery cell 111 currently connected to the PCM 112. For example, at least one of the first identification information 601 and the second identification information 602 may be product serial number-type information, but is not limited thereto, and the identification information 601 or 602 may also be implemented as other types of information for identifying the product. The first identification information 601 and the second identification information 602 may be implemented as information of the same type or as information of different types.

In the removable battery 110, the PCM112 and the battery cell 111 may be integrally manufactured. However, since the PCM 112 and the battery cell 111 are electrically combined to each other in the removable battery 110, only the PCM 112 may be separated from the removable battery 110 and replaced with another module, or only the battery cell 111 may be separated and replaced with another battery cell. When battery authentication is performed using only the identification information of the PCM 112, it may not be possible to prevent the battery cell 11 from being replaced with another unauthenticated battery cell 111 and then being used.

Therefore, in order to ensure the reliability of both the PCM 112 and the battery cell 111 provided in the removable battery 110, the PCM 112 obtains the second identification information 602 of the battery cell 111 from the battery cell 111 currently coupled to the PCM 112 through an electrical connection and stores the obtained second identification information as authentication information in the memory 1122 together with the first identification information 601. Accordingly, when the battery cell 111 in the removable battery 110 is arbitrarily replaced with another battery cell, a different second identification information of another battery cell may be stored in the authentication information or the second identification information may be lost.

In an embodiment, the processor 130 may determine whether the removable battery 110 is an authenticated battery by comparing each of the first identification information 601 and the second identification information 602 with authentication identification information pre-stored in the memory 150 of the aerosol-generating device 100. Alternatively, the processor 130 may determine whether the removable battery 110 is an authenticated battery by comparing the identification information with identification information stored in an external manufacturer battery database DB by using a communication element provided in the aerosol-generating device 100. The method by which the processor 130 determines whether the removable battery 110 is an authenticated battery by using the identification information is not limited to one method, and various elements may be used.

That is, to authenticate the removable battery 110, the aerosol-generating device 100 according to the present embodiment may access the PCM 112 provided in the removable battery 110, obtain authentication information including the first identification information 601 and second identification information 602, and perform battery authentication using the obtained authentication information.

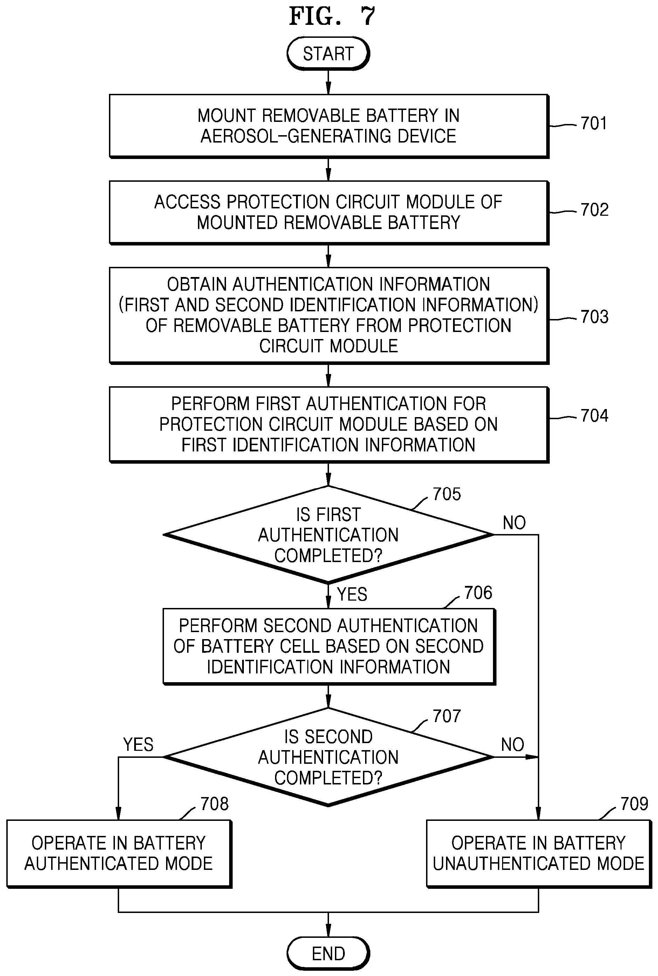

FIG. 7 is a detailed flowchart of a method of authenticating a removable battery in an aerosol-generating device according to an embodiment. Referring to FIG. 7, the method of authenticating the removable battery 110 corresponds to the process that is operated in time series in the drawings described above (e.g., the aerosol-generating device 100 of FIG. 1).

In operation 701, the processor 130 detects that a removable battery 110 is newly mounted in the aerosol-generating device 100 through the battery connection unit 170.

In operation 702, the processor 130 accesses the PCM 112 by being electrically combined with the PCM 112 provided in the newly mounted removable battery 110 through the battery connection unit 170.

In operation 703, the processor 130 obtains authentication information (e.g., the first identification information 601 and the second identification information 602) of the removable battery 110 from the PCM 112 (e.g., the memory 1122) of the removable battery 110.

Here, the first identification information 601 included in the authentication information may indicate product-specific information about the PCM 112, and the second identification information 602 may indicate product-specific information about the battery cell 111 currently connected to the PCM 112.

In operation 704, the processor 130 performs primary authentication for the PCM 112 based on the obtained first identification information 601.

For example, the processor 130 may determine whether a first authentication is successful by checking whether a serial number indicated by the obtained first identification information 601 corresponds to a serial number having a format managed by the manufacturer of the aerosol-generating device 100, the battery manufacturer, or other sales entities. In another example, when the obtained first identification information 601 is encrypted, the processor 130 may determine whether the first authentication is successful by decrypting the first identification information 601 in a predetermined method and checking whether the decrypted data indicates an authenticated PCM 112. That is, the method by which the processor 130 determines whether authentication is successful or not based on the first identification information 601 is not limited to one method and various methods may be used according to the type of the first identification information 601.

In operation 705, the processor 130 controls so that operation 706 is performed when the first authentication is successful. However, the processor 130 controls so that operation 709 is performed when the first authentication fails. That is, when the first authentication fails, the aerosol-generating device 100 may operate in an unauthenticated mode.

In operation 706, when the processor 130 determines that the PCM 112 is an authenticated module through the first authentication, the processor 130 performs a second authentication on the battery cell 111 based on the obtained second identification information 602.

Similarly to the first authentication, the processor 130 may determine whether the second authentication is successful by checking whether a serial number indicated by the obtained second identification information 602 corresponds to a serial number having a format managed by the manufacturer of the aerosol-generating device 100, the battery manufacturer, or other sales entities. In another example, when the obtained second identification information 602 is encrypted, the processor 130 may determine whether the second authentication is successful by decrypting the second identification information 602 in a predetermined method and checking whether the decrypted data indicates an authenticated battery cell 111. That is, the method by which the processor 130 determines whether authentication is successful or not based on the second identification information 602 is not limited to one method and various methods may be used according to the type of the second identification information 602.

In operation 707, the processor 130 controls so that operation 708 is performed when the second authentication is successful. That is, when the second authentication is successful, the aerosol-generating device 100 may operate in an authenticated mode. However, the processor 130 controls so that operation 709 is performed when the second authentication fails. That is, when the second authentication fails, the aerosol-generating device 100 may operate in an unauthenticated mode.

In operation 708, when a two-step authentication including the first and second authentications is successful, the processor 130 determines that the mounted removable battery 110 is an authenticated battery and controls the aerosol-generating device 100 to operate in an authenticated mode. Here, the authenticated mode refers to a mode in which all functions of the aerosol-generating device 100 may operate normally by normal power supply from the removable battery 110.

In operation 709, when either of the first and second authentications fails, the processor 130 determines that the mounted removable battery 110 is an unauthenticated battery and controls the aerosol-generating device 100 to operate in an unauthenticated mode. That is, when the processor 130 is unauthenticated either for the first identification information 601 or the second identification information 602, the processor 130 determines that the currently mounted removable battery 110 is an unauthenticated battery.

The authenticated mode refers to a mode in which normal use of the removable battery 110 in the aerosol-generating device 100 is restricted.

In an example, in the unauthenticated mode, the aerosol-generating device 100 may cut off the power supply from the removable battery 110.

In another example, in the unauthenticated mode, the aerosol-generating device 100 may be partially powered by the removable battery 110, but at least some functions of the aerosol-generating device 100 may be deactivated power supplied from the removable battery 110. In other words, in the unauthenticated mode, using only some limited functions of the aerosol-generating device 100 may be possible by power supply from the removable battery 110.

The aerosol-generating device 100 according to the present embodiment performs authentication of the removable battery 110 by performing a two-step authentication including the first authentication of the PCM 112 provided in the removable battery 110 and the second authentication of the battery cell 111 provided in the removable battery 110. This prevents some components in the removable battery 110 from being arbitrarily replaced and misused.

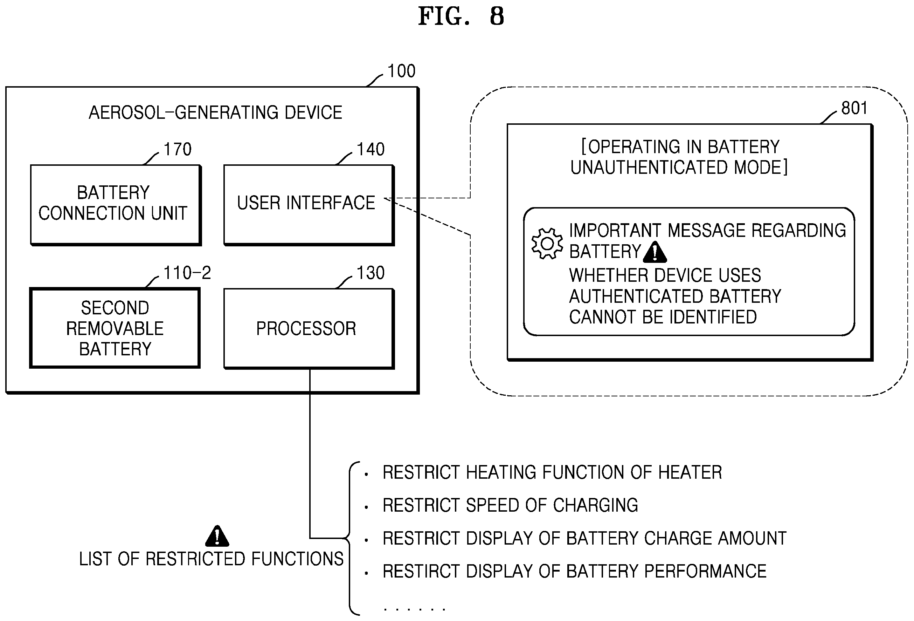

FIG. 8 is a diagram for explaining operation of an aerosol-generating device in an unauthenticated mode according to an embodiment.

Referring to FIG. 8, it is assumed that a currently mounted second removable battery 110-2 is determined to be an unauthenticated battery by the two-step authentication described in FIG. 7.

The user interface 140 provides a notification 810 indicating that the second removable battery 110-2 currently mounted in the aerosol-generating device 100 is an unauthenticated battery and thus, the aerosol-generating device 100 is currently operating in an unauthenticated mode. For example, the notification 810 may include a pop-up window including a message indicating that an unauthenticated battery (the second removable battery 110-2) is currently mounted.

The processor 130 may restrict the performance of at least some functions according to a preset list of restricted functions such that the aerosol-generating device 100 operates in an unauthenticated mode. That is, in the unauthenticated mode, at least some functions of the aerosol-generating device 100 may be deactivated by power supplied from an unauthenticated battery (the second removable battery 110-2).

For example, the processor 130 may limit the heating function of the heater 120 in the unauthenticated mode. In particular, in an example, the processor 130 may block power from being supplied to the heater 120 from an unauthenticated battery (the second removable battery 110-2). Accordingly, it may be impossible to smoke by using the aerosol- generating device 100 operating in an unauthenticated mode. Alternatively, in another example, the processor 130 may control the heater 120 such that only a limited amount of power is supplied from an unauthenticated battery (the second removable battery 110-2) to the heater 120, thereby allowing only a small amount of aerosol to be generated. Alternatively, in another example, the processor 130 may control the heater 120 based on a preset temperature profile different from a normal temperature profile, wherein the different preset temperature profile allows normal power supply to the heater 120 from the unauthenticated battery (the second removable battery 110-2), but may only generate a small amount of aerosol. That is, the restricted heating function of the heater 120 in the unauthenticated mode may refer to the heater 120 operation being deactivated or the heater 120 operating such that only a small amount of aerosol is generated even when the heater 120 operation is activated. The restriction of the heating function of the heater 120 described above is only an example, and the heater 120 may operate with other restricted functions.

For example, the processor 130 may limit the speed of charging of an unauthenticated battery (the second removable battery 110-2) in an unauthenticated mode. In other words, the speed at which an unauthenticated battery (the second removable battery 110-2) is charged by an external charger in the unauthenticated mode may be limited to be lower than the speed at which the unauthenticated battery is charged in the authenticated mode.

For example, in an unauthenticated mode, the processor 130 may restrict information on the remaining capacity (charge amount) (SoC, State of Charge) of an unauthenticated battery (the second removable battery 110-2) from being displayed through the user interface 140.

For example, in an unauthenticated mode, the processor 130 may restrict information on the performance (e.g., SoH, State of Health) of an unauthenticated battery (the second removable battery 110-2) from being displayed through the user interface 140.

That is, in the unauthenticated mode, at least some functions preset in the list of restricted functions of the aerosol-generating device 100 may be restricted or deactivated.

However, the above-described restricted functions are only examples for convenience of explanation, and not all of the functions need to be included in the list of restricted functions. In other words, the functions that are restricted (deactivated) in the unauthenticated mode may include only some of the restricted functions exemplified above, and other functions may also be set to be restricted in various ways. The functions to be restricted in unauthenticated mode may be preset by the manufacturer of the aerosol-generating device 100 or may be changed in various ways by the user's operation.

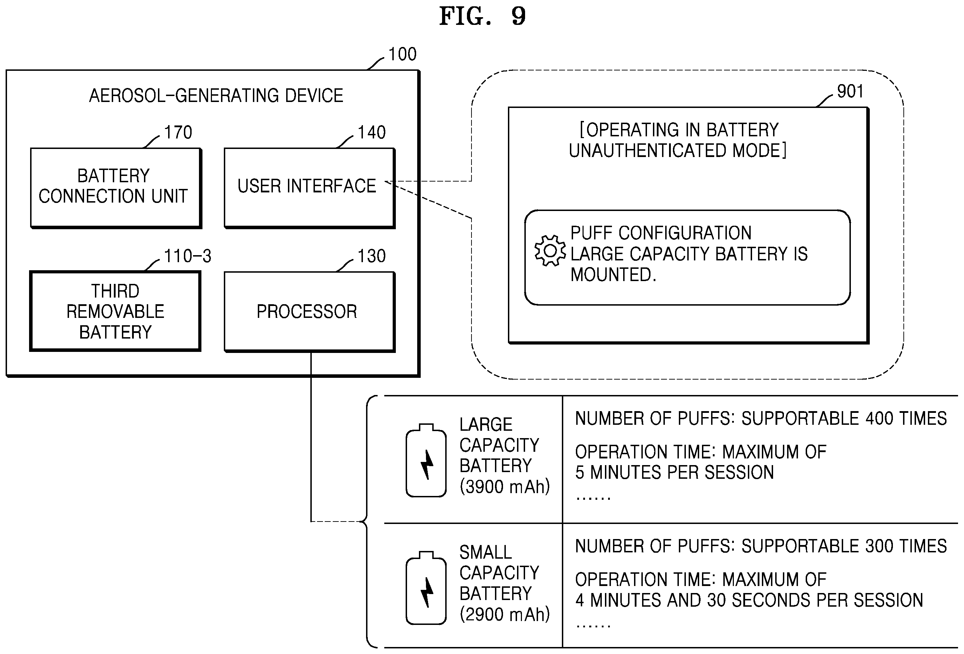

FIG. 9 is a diagram for explaining operation of an aerosol-generating device in an authenticated mode according to an embodiment.

Referring to FIG. 9, description is made assuming that a currently mounted third removable battery 110-3 is determined to be an unauthenticated battery by the two-step authentication described in FIG. 7.

In the authenticated mode, the aerosol-generating device 100 may operate all functions normally by normal power supply from an authenticated battery (the third removable battery 110-3).

In an embodiment, when the aerosol-generating device 100 operates in the authenticated mode, the processor 130 may adjust a puff configuration that may be supported by the aerosol-generating device 100 by identifying the capacity of the battery cell based on the second identification information of the battery cell provided in the authenticated battery (the third removable battery 110-3).

Particularly, when the third removable battery 110-3 is a large-capacity battery, the processor 130 may set the puff configuration of the aerosol-generating device 100 to be customized for the large-capacity battery. For example, the processor 130 may adjust various configurations by setting a total number of supportable puffs without charging the large-scale battery (e.g., a total of 400 times), the maximum possible time for smoking per session (e.g., maximum five minutes), or a temperature profile optimized for the large-scale capacity battery. When the third removable battery 110-3 is a small-capacity battery, the processor 130 may adjust the configurations differently from when the authenticated battery is a large-capacity battery.

The types of battery capacities and the types of puff configurations according to battery capacity described in FIG. 9 are only examples and are not limited thereto, and the aerosol-generating device 100 may be controlled to adjust to various types of puff configurations by distinguishing various types of battery capacities. However, in the authenticated mode, the aerosol-generating device 100 may also be able to operate without setting a separate puff configuration for each battery capacity.

In FIGS. 8 and 9 described above, the user interface 140 of the aerosol-generating device 100 is exemplified as having a display screen. However, according to another embodiment, the user interface 140 may be implemented as a type that does not have a separate display screen, and in such a case, the user interface 140 may distinguish between the authenticated mode and the unauthenticated mode by various other elements, such as blinking of a light-emitting diode (LED), color changing of an LED, changes in the number of LEDs, and sound notification.

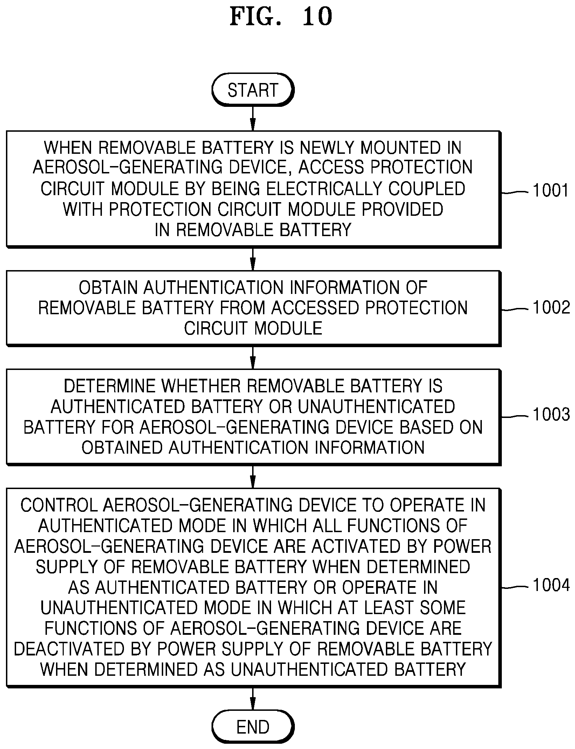

FIG. 10 is a flow chart of a method of performing authentication of a removable battery in an aerosol-generating device according to an embodiment. The method of FIG. 12 corresponds to the operations performed in time series in the drawings described above. Therefore, even if the contents are omitted below, the contents described in the diagrams above may also be applied to the method of FIG. 10.

In operation 1001, the processor 130 accesses the PCM 112 by being electrically coupled with the PCM 112 provided in the removable battery 110 when a removable battery 110 is newly mounted in the aerosol-generating device 100.

In operation 1002, the processor 130 obtains authentication information of the removable battery 110 from the accessed PCM 112.

In operation 1003, the processor 130 determines whether the removable battery 110 is an authenticated battery or an unauthenticated battery for the aerosol-generating device 100 based on the obtained authentication information.

In operation 1004, the processor 130 controls the aerosol-generating device 100 to operate in an authenticated mode in which all functions of the aerosol-generating device are activated by power supply from the removable battery when the removable battery is determined to be authenticated or in an unauthenticated mode in which at least some functions of the aerosol-generating device are deactivated by power supply from the removable battery when the removable battery is determined to be unauthenticated.

The method described above may be composed as a program that is executable by a computer and may be implemented by a general-purpose digital computer for operating the program by using a non-transitory computer-readable recording medium. Also, a data structure used in the method described above may be recorded on the computer-readable recording medium by using various elements. The computer-readable recording medium includes a storage medium, such as a magnetic storage medium (for example, ROM, RAM, USB, a floppy disk, a hard disk, etc.) and an optical reading medium (for example, a CD-ROM, a DVD, etc.)

One of ordinary skill in the art pertaining to the present embodiments can understand that various changes in form and details can be made therein without departing from the scope of the characteristics described above. The disclosed methods should be considered in a descriptive sense only and not for purposes of limitation. The scope of the present embodiments is not reflected in the descriptions above and is reflected in the claims, and all differences within the equivalent scope shall be interpreted to be included in the present embodiments.

## Claims

1. A method of authenticating a removable battery in an aerosol-generating device, the method comprising:
when a removable battery is newly mounted on the aerosol-generating device, accessing a protection circuit module by electrically coupling with the protection circuit module provided in the removable battery;
obtaining authentication information of the removable battery from the accessed protection circuit module;
determining whether the removable battery is an authenticated battery or unauthenticated battery for the aerosol-generating device, based on the obtained authentication information; and
controlling the aerosol-generating device to, when determined as being the authenticated battery, operate in an authenticated mode in which all functions of the aerosol-generating device are activated by power supply from the removable battery or, when determined as being the unauthenticated battery, in an unauthenticated mode in which at least some functions of the aerosol-generating device are deactivated by power supply from the removable battery.

2. The method of claim 1, wherein the obtaining comprises obtaining first identification information of the protection circuit module and second identification information of a battery cell provided in the removable battery, from a memory of the protection circuit module.

3. The method of claim 2, wherein the determining comprises:
performing a first authentication of the protection circuit module, based on the obtained first identification information; and,
when it is determined by the first authentication that the protection circuit module is an authenticated module, performing a second authentication of the battery cell, based on the obtained second identification information, wherein,
when it is determined by the second authentication that the battery cell is an authenticated battery cell, the removable battery is determined as the authenticated battery.

4. The method of claim 2, wherein the determining comprises, when either one of the obtained first identification information and the obtained second identification information is unauthenticated, the removable battery is determined as the unauthenticated battery.

5. The method of claim 2, wherein at least one of the first identification information and the second identification information comprises product serial number-type information.

6. The method of claim 1, wherein the at least some of the functions that are deactivated in the unauthenticated mode comprise a heating function of a heater of the aerosol-generating device.

7. The method of claim 1, wherein
a speed of charging of the removable battery by an external charger in the unauthenticated mode is controlled to be less than a speed of charging of the removable battery in the authenticated mode.

8. The method of claim 1, further comprising providing, through a user interface of the aerosol-generating device, a notification indicating that the aerosol-generating device is currently operating in the unauthenticated mode, after the removable battery is newly mounted.

9. The method of claim 1, further comprising, when the aerosol-generating device operates in the authenticated mode, adjusting a puff configuration supportable in the aerosol-generating device, by identifying a capacity of the battery cell, based on second identification information of the battery cell provided in the removable battery.

10. An aerosol-generating device comprising:
a battery connection configured to, when a removable battery newly is mounted on the aerosol-generating device, access a protection circuit module by electrically coupling with the protection circuit module provided in the removable battery; and
a processor configured to obtain authentication information of the removable battery from the protection circuit module by accessing the protection circuit module through the battery connection unit, determine whether the removable battery is an authenticated battery or unauthenticated battery for the aerosol-generating device, based on the obtained authentication information, and control the aerosol-generating device to operate in an authenticated mode in which all functions of the aerosol-generating device are activated by power supply from the removable battery, when the removable battery is determined as an authenticated battery, or in an unauthenticated mode in which at least some functions of the aerosol-generating device are deactivated by power supply from the removable battery, when the removable battery is determined as an unauthenticated battery.

11. The aerosol-generating device of claim 10, wherein the processor is further configured to
obtain first identification information of the protection circuit module and second identification information of a battery cell provided in the removable battery from a memory of the protection circuit module, and
perform a first authentication for the protection circuit module based on the obtained first identification information and a second authentication for the battery cell based on the obtained second identification information.

12. The aerosol-generating device of claim 11, wherein,
when it is determined by the first authentication that the protection circuit module is an authenticated module, the processor performs a second authentication for the battery cell, and
when it is determined by the second authentication that the battery cell is an authenticated battery cell, the processor determines that removable battery is the authenticated battery.

13. The aerosol-generating device of claim 10, further comprising a heater configured to heat an aerosol-generating material, wherein the at least some of the functions that are deactivated in the unauthenticated mode comprise a heating function of the heater of the aerosol-generating device.

14. The aerosol-generating device of claim 10, further comprising a user interface that provides a notice indicating that the aerosol-generating device is currently operating in the unauthenticated mode, after the removable battery is newly mounted.

15. A non-transitory computer-readable recording medium on which is recorded a program to perform any one of claims 1 to 9 on a computer.
